# EUROPEAN PATENT APPLICATION

(11) **EP 4 745 777 A1**
(43) Date of publication of application: **20.05.2026**
(21) Application number: 25212031.6
(22) Date of filing: 29.10.2025
(51) Int. Cl.: G06F 9/54

(54) **SCALABLE EVENT STREAM PROCESSING OF TRIGGER RULES**

(30) Priority: 15.11.2024 US 202463720899 P; 13.02.2025 US 202519053139
(71) Applicant: Microsoft Technology Licensing, LLC, Redmond, WA 98052-6399 (US)
(72) Inventor: Colantonio, Luca, Redmond, WA, 98052 (US); Szyperski, Clemens A., Redmond, WA, 98052 (US); Pinto Bessa de Melo Cerqueira, Nuno Jose, Redmond, WA, 98052 (US); Kiryushin, Maxim, Redmond, WA, 98052 (US); Toma, Sorin Alexandru, Redmond, WA, 98052 (US)
(74) Representative: Grünecker Patent- und Rechtsanwälte PartG mbB

(57) **Abstract**

Systems, methods, and computer program products are disclosed for scalable event stream processing of trigger rules. Event data associated with a set of object is partitioned into a set of logical partitions, including a first logical partition comprising first event data associated with a first object. The first logical partition is provided to a first event processor to enable the first event processor to update a state associated with the first object based on first event data in the first logical partition. Satisfaction of a first trigger condition specified by a first trigger rule is determined based on the state associated with the first object. A first action is performed in response to the satisfaction of the first trigger condition.

## Description

### CROSS-REFERENCE TO RELATED APPLICATIONS

This U.S. non-provisional application claims priority to U.S. provisional application number 63/720,899, entitled "SCALABLE STREAM PROCESSING OF TRIGGER RULES," and filed November 15, 2024, the entirety of which is incorporated herein by reference.

### BACKGROUND

Trigger rules are automated conditions set to activate specific actions when certain criteria are met. According to trigger rules, events and/or data are monitored to detect when predefined conditions are satisfied in order to initiate an automated response, such as, but not limited to, sending an alert, updating data, invoking a function, and/or executing a process. Trigger rules help automate workflows, and/or react to specific conditions to make processes more efficient by reducing the need for manual intervention. Trigger conditions can be customized to ensure that tasks, alerts, and/or processes are triggered under certain predefined conditions.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Systems, methods, and computer program products are disclosed for scalable event stream processing of trigger rules. Event data associated with a set of object is partitioned into a set of logical partitions. The set of logical partitions are provided to a set of event processors to enable the set of event processors to process event data in the logical partitions according to a set of trigger rules. In embodiments, the event processors cause actions to be performed in response to the satisfaction of the trigger rules.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows a block diagram of an example system for scalable event stream processing of trigger rules, in accordance with an embodiment.
FIG. 2 shows a block diagram of an example system for scalable event stream processing of a logical partition by an event processor, in accordance with an embodiment.
FIG. 3 shows a block diagram of an example system for transferring event stream processing of a logical partition to another event processor, in accordance with an embodiment.
FIG. 4 shows a block diagram of an example system for event stream processing of a new trigger rule, in accordance with an embodiment.
FIG. 5 shows a flowchart of an example process for scalable event stream processing of a logical partition by an event processor, in accordance with an embodiment.
FIG. 6 shows a flowchart of an example process for partitioning event data into a set of logical partitions, in accordance with an embodiment.
FIG. 7 depicts a flowchart of an example process for repartitioning event data into a set of logical partitions, in accordance with an embodiment.
FIG. 8 shows a flowchart of an example process for transferring event stream processing of a logical partition to another event processor, in accordance with an embodiment.
FIG. 9 shows a flowchart of an example process for event stream processing of a new trigger rule, in accordance with an embodiment.
FIG. 10 shows a flowchart of an example process for event stream processing of a stateless event trigger rule, in accordance with an embodiment.
FIG. 11 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments

Trigger rules are automated conditions set to activate specific actions when certain criteria are met. According to trigger rules, events and/or data are monitored to detect when predefined conditions are satisfied. Trigger rules are often employed in event processing to determine when event data satisfies the trigger condition. Event processing includes simple event processing, where individual events are handled independently, and complex event processing, where multiple events are analyzed to identify patterns, correlations, and/or trends. Additionally, event processing include batch processing, where events are analyzed in batches, and stream processing, where event streams are analyzed in real time or near-real time. As the size and/or complexity of monitored systems increase, the amount of data and/or events that need to be analyzed can exceed the capacity of a single machine. In such scenarios, it becomes necessary to partition the event data in order to distribute event processing across a plurality of machines. This is especially true for real-time event stream processing, where delayed processing of event data can result in a delayed response that may result in undesirable results (e.g., security breaches, QoS violations, etc.).

Existing techniques for partitioning event data include key-based partitioning, where event data is partitioned based on a key (e.g., identifier) in the event data, and the partitioned event data is assigned to a task for processing based on a hash of the key. This approach enables event data that shares a common key (e.g., identifier) to be processed together by the task to which the partition is assigned. However, key-based partitioning of event data can result in a large number of partitions, which can lead to substantial overhead costs. Furthermore, complex event processing can include trigger rules that rely on event data from different event data streams associated with different identifiers. In such scenarios, key-based partitioning lacks the flexibility to route event data from multiple event data streams to the same event processor for processing. For instance, when event data relied upon by a trigger rule are routed to different event processors, the event processors may need to communicate with each other to determine when the trigger condition is satisfied, resulting in increased latency in detecting when the trigger condition is satisfied.

Embodiments disclosed herein overcome these issues in conventional systems. In order to reduce overhead costs associated with a large number of partitions, examples disclosed herein determine a number of logical partitions necessary to ensure that the event data is distributed across a sufficient number of event processors to prevent overloading, and assign a subset of the logical partitions to a customer (e.g., tenant) for processing event data belonging to the customer. In order to reduce latency in detecting when the trigger condition is satisfied, rule hints are employed that are determined from the trigger rules to route event data that is relevant to a trigger rule to the same partition for processing by the same event processor.

According to embodiments, a number of logical partitions for partitioning the event data is determined to ensure that the event data is distributed across a number of event processors to prevent overloading. For instance, a data partitioner determines a number of event processors needed to process the event data based on the capacity of the event processors, and determines the number of logical partitions based on the needed number of event processors. The data partitioner then assigns a subset of the logical partitions to a particular customer (e.g., tenant), and partitions event data belonging to the customer into the logical partitions assigned to the customer. The number of logical partitions assigned to the customer is limited based on the amount of event data belonging to the customer in order to reduce overhead.

The data partitioner, in embodiments, partitions the event data into a set of logical partitions using on rule hints determined from trigger rules, which allows a set of event processors to efficiently process the event data in a scalable fashion. For instance, trigger rules are analyzed to determine information (e.g., object identifiers) relevant (e.g., referenced by) the trigger rules, and rule hints are generated based on the determined information. Based on the rule hints, the data partitioner partitions event data associated with the determined information (e.g., object identifiers) into the same logical partition to ensure that the event processor that will process the partition has access to the event data necessary for determining whether the trigger rule is satisfied.

In configurations, event data arrives at an ingestion pipeline as event data associated with (e.g., generated by) one or more monitored objects, such as, but not limited to, entities (e.g., persons, organizations, etc.), items (e.g., packages, vehicles, components, etc.), locations (e.g., buildings, regions, etc.), and/or the like. The event data arrives in one or more formats, such as, but not limited to, as one or more data streams, in data batches, as time-series data, as timestamped data, as vector data, and/or the like. In embodiments, the event data includes information associated with one or more objects (e.g., entity, item, location, etc.) and/or object instances, such as, but not limited to, temperature, speed, time, utilization, sensor data, and/or the like.

The ingestion pipeline, in configurations, processes the event data against stateless trigger rules to determine whether the event data satisfies the stateless trigger rules. Employing an ingestion pipeline to process stateless trigger rules reduces the latency for triggering stateless rules. Additionally, stateless trigger rule processing is offloaded from the event processors, thereby freeing up additional capacity for the event processors to process complex trigger rules. In embodiments, the stateless trigger rules comprising stateless conditions that can be satisfied by one or more time-series values in the event data without maintaining state information for the time-series values.

The event data is, in configurations, provided to a data partitioner for partitioning into a set of logical partitions according to various factors, such as, but not limited to, the relevancy of event data to one or more of a set of trigger rules, the capacity of the set of event processors, and/or the like. As used herein, the term "logical partition" refers to an abstract subset of event data that will processed by the same event processor. For instance, event data is logically divided based on rule hints into subsets of event data and the subsets of event data are provided to event processors for processing. Partitioning event data based on rule hints reduces latency in detecting when a trigger condition is satisfied by ensuring that event data relevant to a trigger rule are partitioned into the same logical partition for processing by the same the event processor. In embodiments, event data associated with a logical partition can be repartitioned by dividing the logical partition into two or more logical partitions, and/or reassigned to a different event processor for processing.

In examples, the set of trigger rules are analyzed to determine a set of rule hints that are used to partition the event data. As used herein, the term "rule hint" refers to any information relevant to the trigger rules, such as, but not limited to, the types of objects (e.g., entity type, item type, location type, etc.) relevant to the trigger rules, and/or the types of information (e.g., object identifier, temperature, speed, time, etc.) relevant to the trigger rules. Based on the rule hints, the data partitioner partitions the event data into a set of logical partitions such that event data relevant to the same trigger rule is grouped together. In embodiments, the data is partitioned according to the type of object (e.g., entity type, item type, location type, etc.) such that event data related to different types of objects are partitioned into different logical partitions. In instances, the data is partitioned according to object instance such that event data related to different instances of the same type of object are partitioned into different logical partitions, and/or partitioned according to the type of information (e.g., temperature, speed, time, etc.) such that event data related to different types of information are partitioned into different logical partitions.

The data partitioner, in configurations, assigns available partitions to customers (e.g., tenants) based on an identifier associated with the customer (e.g., tenantID). In instances, the data partitioner employs a rendezvous hashing algorithm to determine which partitions to assign to which customers. In embodiments, event data associated with (e.g., belonging to) the customer is split into the partitions assigned to the customer using a second hashing algorithm based on an instance identifier associated with the object instance. Partitioning event data into the partitions assigned to the customer reduces the overhead costs associated with existing key-based partitioning techniques by employing fewer partitions.

In embodiments, the data partitioner partitions the event data according to the capacities of the set of event processors in order to ensure that the logical partitions can be processed by a single event processor. For instance, the data partitioner determines the throughput of the event processors (e.g., number of events processed per time period) and determines the logical partitions to ensure that the number of events per time period in the logical partitions does not exceed the throughput capacity of the event processors. In embodiments, the data partitioner determines updated capacities of the set of event processors and repartitions the event data using the updated capacities. In instances, the throughput capacity of the event processors are limited by the available resources (e.g., processor capacity, memory capacity, etc.) of the event processors.

The data partitioner, in configurations, provides the set of logical partitions to the set of event processors using the capacities of the set of event processors. For instance, the data partitioner groups one or more logical partitions using the size of the logical partitions and/or the capacities of the set of event processors, and provides the groups of logical partitions to the set of event processors. In embodiments, an event processor of the set of event processors process one or more of the logical partitions to determine whether event data in the one or more logical partitions satisfy trigger conditions associated with a subset of the trigger rules. By partitioning the event data into a set of logical partitions, the set of event processors can process large amounts of event data in a scalable and efficient fashion.

In aspects, the data partitioner stores the set of logical partitions in a storage system for future access. For instance, when a trigger rule is added and/or activated, the stored set of logical partitions can be replayed by providing the stored logical partitions to an event processor to enable the event processor to determine whether a newly added and/or activated trigger rule is satisfied by past event data. In embodiments, the stored set of logical partitions are stored in various ways, such as, but not limited to, in a database, in a file storage system, in a cloud storage system, as a blob (Binary Large Object), and/or the like.

The set of event processors, in examples, acquire ownership of available (i.e., unclaimed) logical partitions in order to process event data associated with the available partitions. In instances, when an event processors gains ownership of a partition, it performs a recovery process to load state data in order to start processing event associated with the partition, and when an event processor loses ownership of a partition, it stops processing of event data associated with the partition. The ability of event processors to acquire and lose ownership of a logical partition enhances load balancing by redistributing logical partitions from overloaded event processors to other event processors, and failover by enabling logical partitions owned by a failed event processor to be transferred to another event processor.

The set of event processors, in configurations, process event data in the set of logical partitions in order to determine whether the event data satisfy trigger conditions defined by the set of trigger rules. For instance, the event processors maintain state information associated with the objects using the event data in the set of logical partitions, and determine whether the state information satisfies the trigger conditions defined by the set of trigger rules.

In embodiments, the trigger rules comprise a set of one or more functional expressions that are evaluated over time-series data. For example, a trigger rule for determining whether a temperature exceeds a threshold temperature (e.g., 32 degrees F, etc.) will include a functional expression that compares temperature values (e.g., 10F, 20F, 30F, 34F, 43F, etc.) in the time-series data against the threshold temperature and outputs a series of Boolean values (e.g., 0, 0, 0, 1, 1, etc.) that are indicative of whether the temperature values of the time-series data exceed the threshold temperature. In such a scenario, the trigger rule would be satisfied when the output includes a Boolean value equal to TRUE (e.g., 1). In another example, a trigger rule for determining whether a temperature remains over a threshold temperature (e.g., 32 degrees F, etc.) for a predetermined period of time (e.g., 10 minutes) will include a first functional expression that compares temperature values (e.g., 10F, 20F, 30F, 34F, 43F, etc.) in the time-series data against the threshold temperature and outputs a series of Boolean values (e.g., 0, 0, 0, 1, 1, etc.) that are indicative of whether the temperature values of the time-series data exceed the threshold temperature, and a second functional expression that counts the number of output Boolean values that are equal to TRUE (e.g., 1) to determine whether the temperature has remained over the threshold temperature for the predetermined time period. In embodiments, trigger rules can combine any number of functional expressions, such as, but not limited to, logical expressions (e.g., <, <=, =, >=, >, etc.), mathematical expressions (e.g., average, mean, median, percentage, count, standard deviation, etc.), sliding window expressions (e.g., count over a sliding window, mathematical function over a sliding window, etc.), and/or the like. In embodiments, the event processors maintain state information associated with the objects by storing one or more outputs of the functional expressions.

When an event processor determines that a trigger condition is satisfied, the event processor, in examples, causes a responsive action to be performed, such as, but not limited to, transmitting a message and/or alert to a recipient, opening a ticket in a ticketing system, invoking a webhook, invoking an API (Application Programming Interface) function, automatically performing a remedial action, and/or the like. In embodiments, the responsive action is determined by a user (e.g., customer, admin, etc.) when defining the trigger rule.

In order to enable load balancing and/or failover, the set of event processors, in configurations, stores the state information associated with objects in a storage system for access by other event processors. In embodiments, the set of event processors periodically store a progress indicator in a storage system to indicate the event data that has been processed by the event processor. In examples, the state information and/or the progress indicators are stored in various ways, such as, but not limited to, in a database, in a file storage system, in a cloud storage system, as a blob (Binary Large Object), and/or the like.

In order to provide load balancing and/or failover, the set of logical partitions can , in embodiments, be redistributed to different event processors for processor, and/or repartitioned into a different number of logical partitions to balance the load across the event processors. For instance, when a first event processor becomes unavailable (e.g., fails, requires maintenance, becomes unstable, etc.), or becomes overloaded (e.g., has high utilization, has low capacity, etc.) the data partitioner transfers processing of one or more logical partitions being processed by the first event processor to second event processor. The second event processor accesses progress indicators and state information associated with the transferred logical partitions, and processes event data in the transferred logical partitions starting from a position determined using the progress indicators.

In embodiments, the data partitioner increases the number of partitions assigned to the customer in order to spread out the data processing across additional event processors. In examples, the data partitioner increases the number of partitions assigned to a customer by a factor of two (i.e., x2) in order to simplify checkpoint management. For instance, by doubling the number of partitions by a factor of 2, event data belonging to each partition is divided between two new (i.e., child) partitions, and the new partitions can refer to the checkpoints of the old (i.e., parent) partition during checkpoint management. In configurations, the data partitioner repartitions the data when the number of trigger rules and/or when the number of partitions assigned to a customer changes. For instance, the data partitioner determines updated partitioning parameters and an effective time for the updated partitioning, and provides the updated partitioning parameters and effective time to the event processors. In instances, the data partitioner determines the effective time as an arbitrary time in the future that provides sufficient notice to the event processors to transition to processing of the event data based on the updated partitioning parameters. At the effective time, the data partitioner begins partitioning the event data based on the updated partitioning parameters, and the event processors stop processing event data that no longer flow to the partitions associated with the event processor and initiate a recovery process to load state data in order to start processing event data for data newly flowing to the partitions associated with the event processor.

The amount of event data in the set of logical partitions can change over time based on the type of event data in incoming event data streams. For instance, the amount of event data generated by an object instance can fluctuate over time, resulting in a change in the amount of data in a logical partition that includes event data from the object instance. These fluctuations can cause the amount of event data in a logical partition to exceed a processing capacity of an event processor and/or cause an imbalance in the distribution of the set of logical partitions among the set of event processors. In such scenarios, the data partitioner, in embodiments, repartitions the event data into a set of updated logical partitions that are distributed to the set of logical partitions. In order to adjust the number of event processors according to the workload, one or more event processors is added and/or removed from the set of event processors responsive to the increase and/or decrease in the amount of event data. Adjusting the number of event processors optimizes resource utilization by balancing performance (e.g., satisfying throughput/latency goals) and cost (e.g., avoiding underutilized event processors). After acquiring ownership of updated logical partitions, the set of event processors, in examples, access progress indicators and/or state information associated with the updated logical partitions, and process event data in the updated logical partitions starting from a position determined using the progress indicators.

In embodiments, the addition and/or activation of a new trigger rule to the set of trigger rules requires the processing of past event data to determine whether the new trigger rule is satisfied. In such instances, the event processor replays event data relevant to the new trigger rule by accessing past event data from storage, and updating state information associated with an object using the past event data to determine whether the state information satisfies a trigger condition associated with the new trigger rule. In examples, the event processor replays the event data from a point in time necessary to determine whether the trigger condition has been satisfied. For instance, the event processor replays event data in the last 24 hours when a new trigger rule has a trigger condition that is dependent on 24 hours of event data.

These and further embodiments enable the functionality described above and additional functionality. Such embodiments are described in further detail as follows.

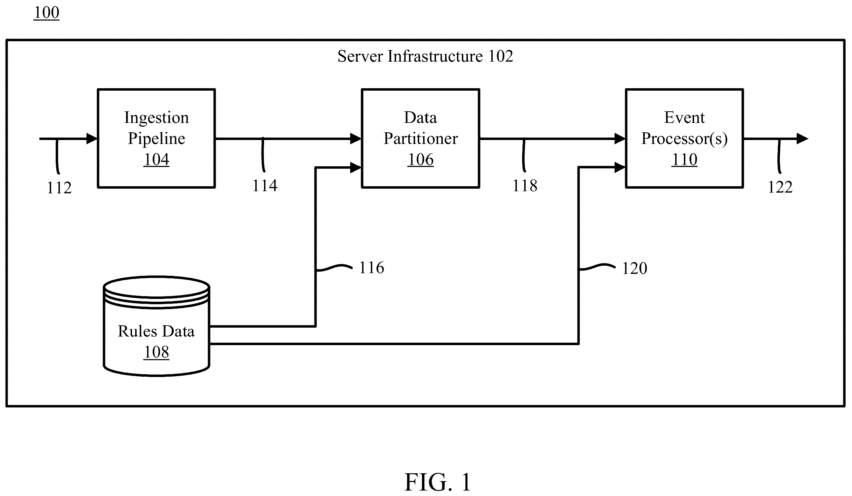

For example, FIG. 1 shows a block diagram of an example system 100 for scalable event stream processing of trigger rules, in accordance with an embodiment. As shown in FIG. 1, system 100 includes a server infrastructure 102 that comprises an ingestion pipeline 104, a data partitioner 106, rules data 108, and one or more event processors 110. System 100 is described in further detail as follows.

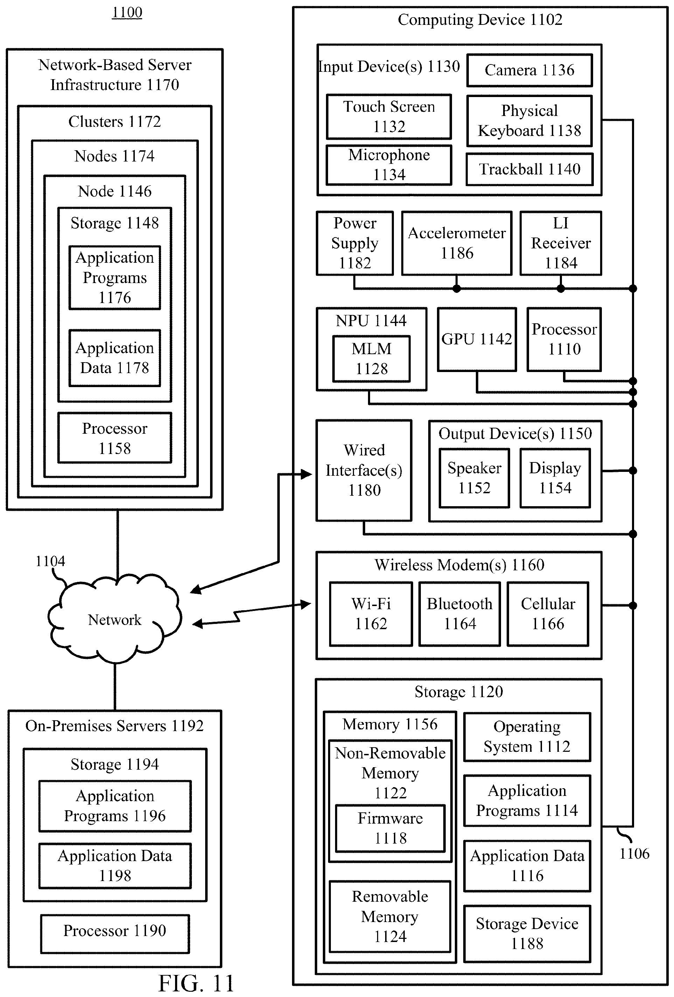

Server infrastructure 102 comprises a network-accessible server set (e.g., cloud-based environment or platform). In an embodiment, the underlying resources of server infrastructure 102 are co-located (e.g., housed in one or more nearby buildings with associated components such as backup power supplies, redundant data communications, environmental controls, etc.) to form a datacenter, are distributed across different regions, and/or are arranged in other manners. Various example implementations of server infrastructure 102 are described below in reference to FIG. 11 (e.g., network-based server infrastructure 1170, and/or components thereof).

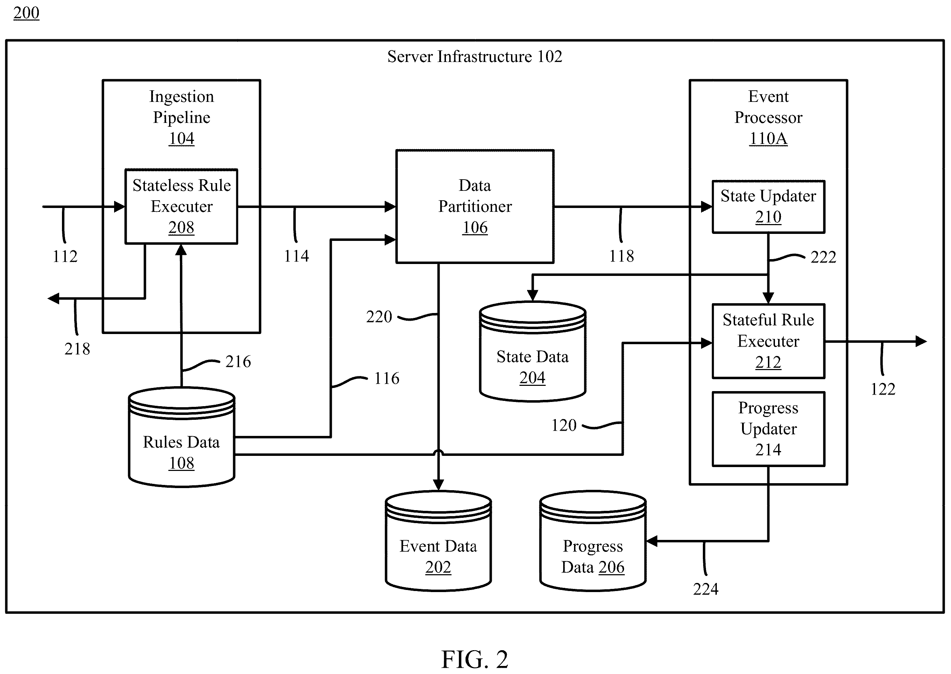

Ingestion pipeline 104 is configured to receive event data 112 from a customer. In embodiments, ingestion pipeline 104 receives event data 112 from a customer through various means, such as, but not limited to, directly from a customer, through a monitoring agent executing on a component associated with the customer, from storage associated with the customer, and/or the like. In embodiments, ingestion engine provides at least a portion of event data 112 to data partitioner 106 as event data 114 for partitioning into a set of logical partitions. Ingestion pipeline 104 will be described in greater detail below in conjunction with FIG. 2.

In embodiments, event data 112 is associated with one or more monitored objects and/or object instances, such as, but not limited to, entities (e.g., persons, organizations, etc.), items (e.g., packages, vehicles, components, etc.), locations (e.g., buildings, regions, etc.), and/or the like. In embodiments, event data 112 arrives in various formats, such as, but not limited to, as one or more data streams, in data batches, as time-series data, as timestamped data, as vector data, and/or the like. In embodiments, the event data includes information associated with one or more objects (e.g., entity, item, location, etc.) and/or object instances, such as, but not limited to, temperature, speed, time, utilization, sensor data, and/or the like.

Data partitioner 106 is configured to partition event data 114 into a set of logical partitions 118 according to various factors, such as, but not limited to, the relevancy of event data to one or more of a set of trigger rules, the capacity of the set of event processors, and/or the like. In embodiments, data partitioner 106 employs a set of rule hints 116 to partition the event data. For instance, rule hints 116 can specify the information relevant to the trigger rules, such as, but not limited to, the types of objects (e.g., entity type, item type, location type, etc.) relevant to the trigger rules, and/or the types of information (e.g., temperature, speed, time, etc.) relevant to the trigger rules. Using rule hints 116, data partitioner 106, in embodiments, partitions event data 114 into logical partitions 118 such that relevant event data are grouped together. In instances, data partitioner 106 employs a rendezvous hashing algorithm to determine which partitions to assign to which customers. In embodiments, data partitioner 106 partitions event data associated with the customer into the partitions assigned to the customer using a second hashing algorithm based on an instance identifier associated with the object instance. In embodiments, data partitioner 106 partitions event data 114 according to the type of object (e.g., entity type, item type, location type, etc.) such that event data related to different types of objects are partitioned into different logical partitions. In embodiments, data partitioner 106 partitions event data 114 according to object instance such that event data related to different instances of the same type of object are partitioned into different logical partitions. In embodiments, data partitioner 106 partitions event data 114 according to the type of information (e.g., temperature, speed, time, etc.) such that event data related to different types of information are partitioned into different logical partitions. In embodiments, data partitioner 106 provides logical partitions 118 to event processor(s) 110 according to the capacities of event processor(s) 110. For instance, data partitioner 106 groups one or more logical partitions 118 according to the size of logical partitions 118 and/or the capacities of event processor(s) 110, and provides the groups of logical partitions 118 to event processor(s) 110 according to the capacities of event processor(s) 110. In embodiments, data partitioner 106 assigns available partitions to customers (e.g., tenants) based on an identifier associated with the customer (e.g., tenantID).

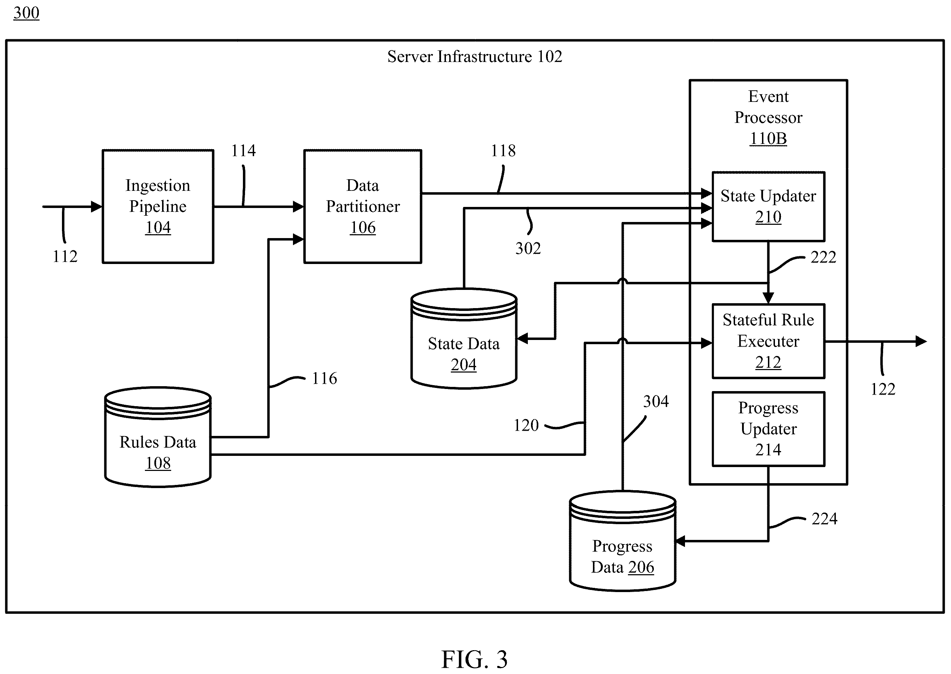

In embodiments, data partitioner 106 repartitions the event data 114 when the number of trigger rules and/or when the number of partitions assigned to a customer changes. For instance, data partitioner 106 increases the number of logical partitions 118 assigned to the customer in order to spread out the data processing across additional event processor(s) 110. In embodiments, data partitioner 106 determines updated partitioning parameters and an effective time for the updated partitioning, and provides the updated partitioning parameters and effective time to event processor(s) 110. In embodiments, data partitioner 106 determines the effective time as an arbitrary time in the future that provides sufficient notice to event processor(s) 110 to transition to processing of event data 114 based on updated logical partitions 118. In embodiments, data partitioner 106 begins partitioning the event data based on the updated partitioning parameters at the effective time. In embodiments, at the effective time, event processor(s) 110 stop processing event data 114 that no longer flow to logical partitions 118 associated with event processor(s) 110, and initiate a recovery process to load state data 204 in order to start processing event data 114 for data newly flowing to the partitions associated with event processor(s) 110. Data partitioner 106 will be described in greater detail below in conjunction with FIGS. 2 and 3.

Rules data 108 comprise trigger rules 120 that include one or more trigger conditions and one or more responsive actions. In embodiments, the trigger conditions comprise a set of one or more functional expressions that are evaluated over time-series data. In embodiments, trigger rules 120 combine any number of functional expressions, such as, but not limited to, logical expressions (e.g., <, <=, =, >=, >, etc.), mathematical expressions (e.g., average, mean, median, percentage, count, standard deviation, etc.), sliding window expressions (e.g., count over a sliding window, mathematical function over a sliding window, etc.), and/or the like.

Event processor(s) 110 comprise computational nodes configured to process logical partitions 118 to determine whether event data in logical partitions 118 satisfy trigger conditions of trigger rules 120, and to perform responsive actions 122 of trigger rules 120 responsive to the satisfaction of the trigger conditions. In embodiments, event processor(s) 110 acquire ownership of available (i.e., unclaimed) logical partitions 118 in order to process event data 114 associated with logical partitions 118. In embodiments, when event processor(s) 110 gain ownership of a partition, event processor(s) 110 perform a recovery process to load state data in order to start processing event associated with the partition. In embodiments, when event processor(s) 110 loses ownership of a partition, event processor(s) 110 stop processing of event data associated with the partition. Various example implementations of event processor(s) 110 are described below in reference to FIG. 11 (e.g., nodes 1174, node 1146, computing device 1102, on-premises servers 1192, and/or components thereof). Event processor(s) 110 will be described in greater detail below in conjunction with FIGS. 2-4.

Embodiments described herein may operate in various ways to perform scalable event stream processing of a logical partition by an event processor. For instance, FIG. 2 shows a block diagram of an example system 200 for scalable event stream processing of a logical partition by an event processor, in accordance with an embodiment. As shown in FIG. 2, system 200 comprises server infrastructure 102, ingestion pipeline 104, data partitioner 106, rules data 108, and an event processor 110A. In system 200, server infrastructure 102 further includes event data 202, state data 204, and progress data 206. Furthermore, ingestion pipeline 104 further includes a stateless rule executer 208, and event processor 110A further includes a state updater 210, a stateful rule executer 212, and a progress updater 214. System 200 is described in further detail as follows.

Event data 202 is configured to store event data 220 associated with logical partitions 118. In embodiments, data partitioner 106 stores logical partitions 118, and/or event data thereof, in event data 202 for future access. In embodiments, event data 202 is implemented in various ways, such as, but not limited to, as a database, as a file storage system, as a cloud storage system, as blob storage, and/or the like.

State data 204 is configured to store state 222 associated with one or more monitored objects. In embodiments, state data 204 is implemented in various ways, such as, but not limited to, as a database, as a file storage system, as a cloud storage system, as blob storage, and/or the like.

Progress data 206 is configured to store progress indicators 224 associated with the processing of logical partitions 118. In embodiments, progress indicators 224 indicate the event data of logical partitions 118 that have been processed by event processor(s) 110. In embodiments, progress data 206 is implemented in various ways, such as, but not limited to, as a database, as a file storage system, as a cloud storage system, as blob storage, and/or the like.

Stateless rule executer 208 is configured to process event data 112 to determine whether event data in event data 112 satisfies a trigger condition of a stateless trigger rule 216, and to cause a responsive action 218 to be performed responsive to the satisfaction of the trigger condition of stateless trigger rule 216. For example, stateless rule executer 208 can determine whether a stateless trigger rule for determining whether a temperature exceeds a threshold temperature (e.g., 32 degrees F, etc.) is satisfied by comparing temperature values (e.g., 10F, 20F, 30F, 34F, 43F, etc.) in event data 112 against the threshold temperature without maintaining any state information.

Event processor 110A is an event processor of event processor(s) 110. In embodiments, event processor 110A is configured to receive a subset of logical partitions 118 and process event data in the subset of logical partitions 118 to determine whether trigger conditions of a subset of trigger rules 120 are satisfied. In embodiments, stateless trigger rule 216 comprises a stateless condition that can be satisfied by event data 112 without maintaining state information.

State updater 210 is configured to receive logical partitions 118 from data partitioner 106 and update a state 222 associated with a monitored object. For instance, state updated 210 can update a cumulative value (e.g., counter, average, average over a sliding time window, etc.) using incoming event data in logical partitions 118. In embodiments, state updater 210 provides updated state 222 to stateful rule executer 212 and/or state data 204.

Stateful rule executer 212 is configured to receive state 222 from state updater 210 and a trigger rule 120 from rules data 108, and to determine whether state 222 satisfies a trigger condition associated with trigger rule 120. In embodiments, when stateful rule executer 212 determines that state 222 satisfies the trigger condition associated with trigger rule 120, stateful rule executer 212 causes responsive action 122 to be performed, such as, but not limited to, transmitting a message and/or alert to a recipient, opening a ticket in a ticketing system, invoking a webhook, invoking an API (Application Programming Interface) function, automatically performing a remedial action, and/or the like. In embodiments, the responsive action is determined by a user (e.g., customer, admin, etc.) when defining the trigger rule.

Progress updater 214 is configured to store progress indicator 224 in progress data 206. In embodiments, progress updater 214 stores progress indicator 224 in progress data 206 at regular time intervals. In embodiments, progress updater 214 stores progress indicator 224 at specific milestones, such as, but not limited to, the satisfaction of a trigger conditions, and/or the like.

Embodiments described herein may operate in various ways to transfer event stream processing of a logical partition to another event processor. For instance, FIG. 3 shows a block diagram of an example system 300 for transferring event stream processing of a logical partition to another event processor, in accordance with an embodiment. As shown in FIG. 3, system 300 comprises server infrastructure 102, ingestion pipeline 104, data partitioner 106, rules data 108, an event processor 110B, state data 204, progress data 206, state updater 210, stateful rule executer 212, and progress updater 214. System 300 is described in further detail as follows.

Event processor 110B is a transfer destination for a logical partition 118 that is being transferred from another event processor 110 (e.g., event processor 110A). For instance, when an event processor (e.g., event processor 110A) becomes unavailable (e.g., fails, requires maintenance, becomes unstable, etc.), or becomes overloaded (e.g., has high utilization, has low capacity, etc.) data partitioner 106 transfers processing of one or more logical partitions 118 being processed by the event processor (e.g., event processor 110A) to another event processor (e.g., event processor 110B). In embodiments, state updater 210 of event processor 110B accesses progress indicator 304 and state 302 associated with a transferred logical partition 118, and processes event data in the transferred logical partition 118 starting from a position determined using progress indicator 304.

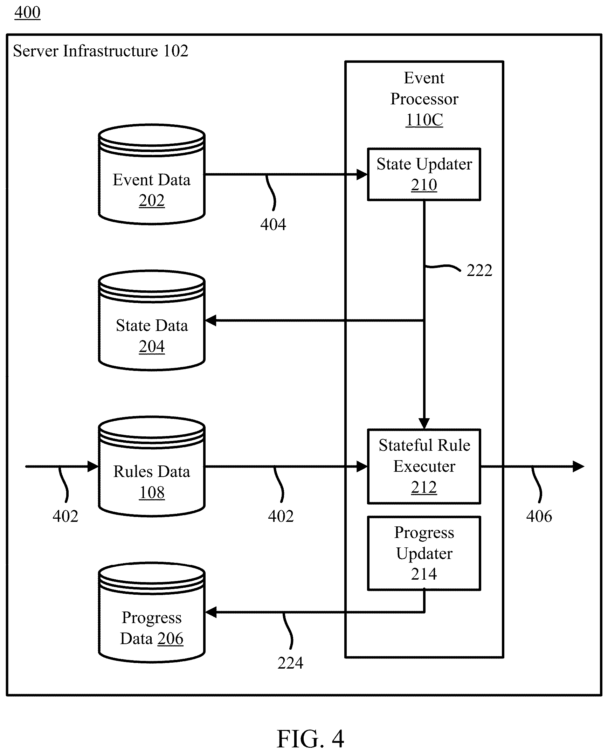

Embodiments described herein may operate in various ways to perform event stream processing of a new trigger rule. For instance, FIG. 4 shows a block diagram of an example system 400 for event stream processing of a new trigger rule, in accordance with an embodiment. As shown in FIG. 4, system 400 comprises server infrastructure 102, rules data 108, an event processor 110C, event data 202, state data 204, progress data 206, state updater 210, stateful rule executer 212, and progress updater 214. System 400 is described in further detail as follows.

Event processor 110C is an event processor of event processor(s) 110 configured to process past event data 404 to determine whether past event data 404 satisfies a trigger condition associated with new trigger rule 402.

In embodiments, new trigger rule 402 comprises a newly added and/or activated trigger rule that requires the processing of past event data 404 to determine whether a trigger condition associated with new trigger rule 402 is satisfied. In embodiments, state updater 210 of event processor 110C accesses past event data 404 from event data 202, and updates state 222 using past event data 404. In embodiments, stateful rule executer 212 of event processor 110C determines whether state 222 satisfies a trigger condition associated with new trigger rule 402, and causes a responsive action 406 of new trigger rule 402 to be performed responsive to determining that state 222 satisfies a trigger condition associated with new trigger rule 402. In embodiments, state updater 210 event processor 110C accesses past event data 404 from a position necessary to determine whether the trigger condition of new trigger rule 402 has been satisfied.

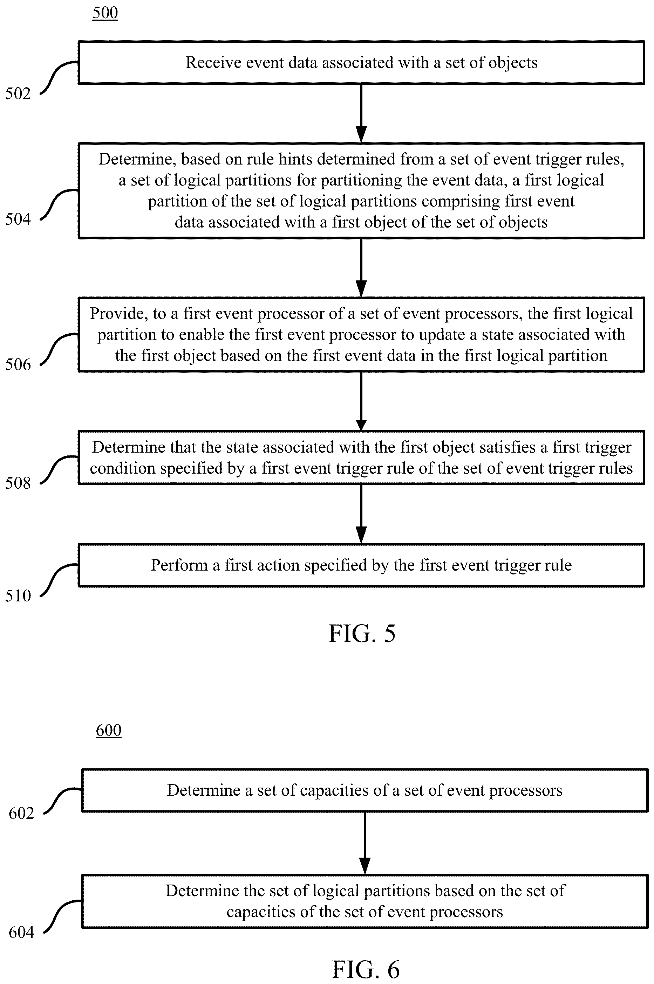

Embodiments described herein may operate in various ways to perform scalable event stream processing of logical partition by an event processor. For instance, FIG. 5 depicts a flowchart 500 of a process for scalable event stream processing of logical partition by an event processor, in accordance with an embodiment. Server infrastructure 102, may, for example, operate according to flowchart 500. Flowchart 500 is described as follows with respect to FIG. 1 and 2 for illustrative purposes.

Flowchart 500 starts at step 502. In step 502, event data associated with a set of objects is received. For example, ingestion pipeline 104 receives event data 112. In embodiments, ingestion pipeline 104 receives event data 112 from a customer through various means, such as, but not limited to, directly from a customer, through a monitoring agent executing on a component associated with the customer, from storage associated with the customer, and/or the like. In embodiments, ingestion engine provides at least a portion of event data 112 to data partitioner 106 as event data 114 for partitioning into a set of logical partitions.

In step 504, a set of logical partitions for partitioning the event data is determined based on rule hints determined from a set of event trigger rules, a first logical partition of the set of logical partitions comprising first event data associated with a first object of the set of objects. For example, data partitioner 106 determines, based on rule hints 116, a set of logical partitions 118 for partitioning event data 114. In embodiments, data partitioner 106 partitions data 114 according to object instance such that event data related to different instances of the same type of object are partitioned into different logical partitions. In embodiments, data partitioner 106 partitions event data 114 according to the type of information (e.g., temperature, speed, time, etc.) such that event data related to different types of information are partitioned into different logical partitions. In embodiments, data partitioner 106 provides logical partitions 118 to event processor(s) 110 according to the capacities of event processor(s) 110. For instance, data partitioner 106 groups one or more logical partitions 118 according to the size of logical partitions 118 and/or the capacities of event processor(s) 110, and provides the groups of logical partitions 118 to event processor(s) 110 according to the capacities of event processor(s) 110.

In step 506, the first logical partition is provided to a first event processor of a set of event processors to enable the first event processor to update a state associated with the first object using the first event data in the first logical partition. For example, data partitioner 106 provides logical partitions 118 to event processor(s) 110. In embodiments, data partitioner 106 groups one or more logical partitions 118 according to the size of the logical partitions 118 and/or the capacities of event processor(s) 110, and provides the groups of logical partitions 118 to event processor(s) 110 according to the capacities. In embodiments, state updater 210 updates state 222 using event data in logical partitions 118. For instance, state updated 210 can update a cumulative value (e.g., counter, average, average over a sliding time window, etc.) using incoming event data in logical partitions 118.

In step 508, the state associated with the first object is determined to satisfy a first trigger condition associated with a first event trigger rule of the set of event trigger rules. For example, stateful rule executer 212 determines that state 222 satisfies a trigger condition associated with trigger rule 120.

In step 510, a first action associated with the first event trigger rule is performed. For example, stateful rule executor 212 causes responsive action 122 to be performed, such as, but not limited to, transmitting a message and/or alert to a recipient, opening a ticket in a ticketing system, invoking a webhook, invoking an API (Application Programming Interface) function, automatically performing a remedial action, and/or the like.

Embodiments described herein may operate in various ways to partition event data into a set of logical partitions. For instance, FIG. 6 depicts a flowchart 600 of a process for partitioning event data into a set of logical partitions, in accordance with an embodiment. Server infrastructure 102, may, for example, operate according to flowchart 600. Flowchart 600 is described as follows with respect to FIGS. 1 and 2 for illustrative purposes.

Flowchart 600 starts at step 602. In step 602, a set of capacities associated with a set of event processors is determined. For example, data partitioner 106 determines a set of capacities associated with event processor(s) 110.

In step 604, the set of logical partitions is determined based on the set of capacities associated with the event processors. For example, data partitioner 106 determines logical partitions 118 for partitioning event data 114 using capacities associated with event processor(s) 110. In embodiments, data partitioner 106 determines logical partitions 118 based on the number of event processor(s) 110 needed to process event data 114.

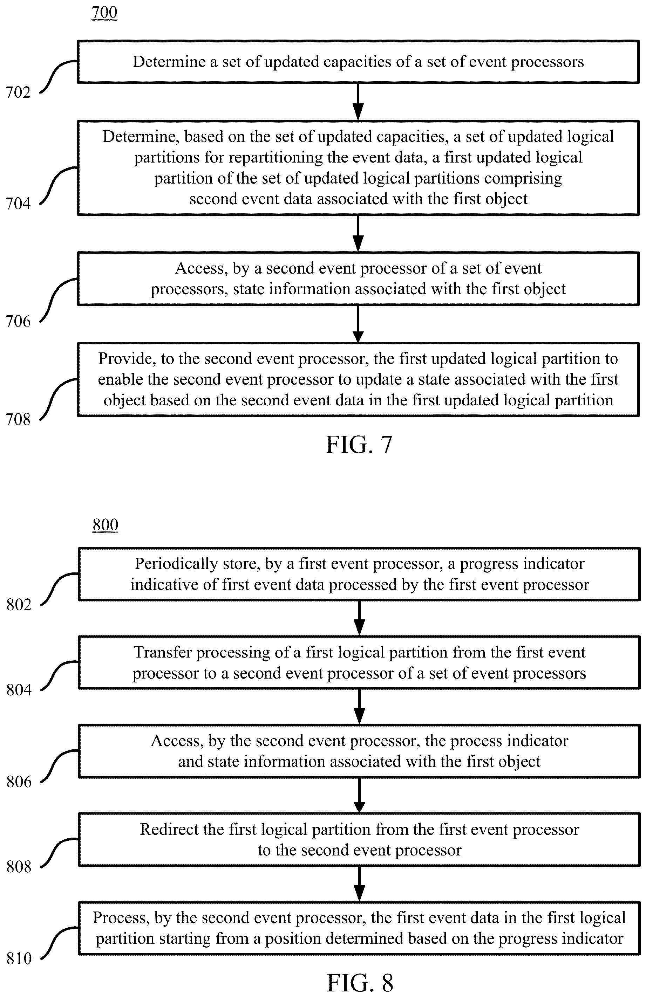

Embodiments described herein may operate in various ways to repartition event data into a set of logical partitions. For instance, FIG. 7 depicts a flowchart 700 of a process for repartitioning event data into a set of logical partitions, in accordance with an embodiment. Server infrastructure 102, may, for example, operate according to flowchart 700. Flowchart 700 is described as follows with respect to FIGS. 1-3 for illustrative purposes.

Flowchart 700 starts at step 702. In step 702, a set of updated capacities associated with a set of event processors is determined. For example, data partitioner 106 determines a set of updated capacities associated with event processor(s) 110.

In step 704, a set of updated logical partitions for repartitioning the event data is determined based on the set of updated capacities, a first updated logical partition of the set of updated logical partitions comprising second event data associated with the first object. For example, data partitioner 106 determines updated logical partitions 118 for repartitioning event data 114 based on capacities associated with event processor(s) 110, and provides updated logical partitions 118 to event processor(s) 110.

In step 706, state information associated with the first object is accessed by a second event processor of a set of event processor. For example, state updater 210 of event processor 110B accesses state 302 from state data 204.

In step 708, the first updated logical partition is provided to the second event processor to enable the second event processor to update a state associated with the first object using the second event data in the first updated logical partition. For example, data partitioner provides updated logical partition 118 to state updater 210 of event processor 110B, and state updater 210 of event processor 110B updates state 302 using event data in updated logical partition 118.

Embodiments described herein may operate in various ways to transfer event stream processing of a logical partition to another event processor. For instance, FIG. 8 depicts a flowchart 800 of a process for transferring event stream processing of a logical partition to another event processor, in accordance with an embodiment. Server infrastructure 102, may, for example, operate according to flowchart 800. Note that not all steps of flowchart 800 need to be performed in all embodiments, and in some embodiments, the steps of flowchart 800 may be performed in different orders than shown. Flowchart 800 is described as follows with respect to FIGS. 1-3 for illustrative purposes.

Flowchart 800 starts at step 802. In step 802, a progress indicator is periodically stored by a first event processor, the progress indicator indicative of first event data processed by the first event processor. For example, progress updater 214 of event processor 110A periodically stores progress indicators 224 in progress data 206. In embodiments, progress indicators 224 indicate the event data of logical partitions 118 that have been processed by event processor(s) 110. In embodiments, progress updater 214 stores progress indicator 224 in progress data 206 at regular time intervals. In embodiments, progress updater 214 stores progress indicator 224 at specific milestones, such as, but not limited to, the satisfaction of a trigger conditions, and/or the like.

In step 804, processing of a first logical partition is transferred from the first event processor to a second event processor of a set of event processors. For example, data partitioner 106 transfers processing of logical partition 118 from event processor 110A to event processor 110B.

In step 806, the progress indicator and state information associated with the first object is accessed by the second event processor. For example, state updater 210 of event processor 110B accesses progress indicator 304 and state 302 associated with a transferred logical partition 118, and processes event data in the transferred logical partition 118 starting from a position determined using progress indicator 304.

In step 808, the first logical partition is redirected from the first event processor to the second event processor. For example, data partitioner 106 redirects logical partition 118 from event processor 110A to event processor 110B.

In step 810, the first event data in the first logical partition is processed by the second event processor starting from a position determined using the progress indicator. For example, state updater 210 of event processor 110B processes event data in logical partition 118 starting from a position determined using progress indicator 304 in order to update state 302.

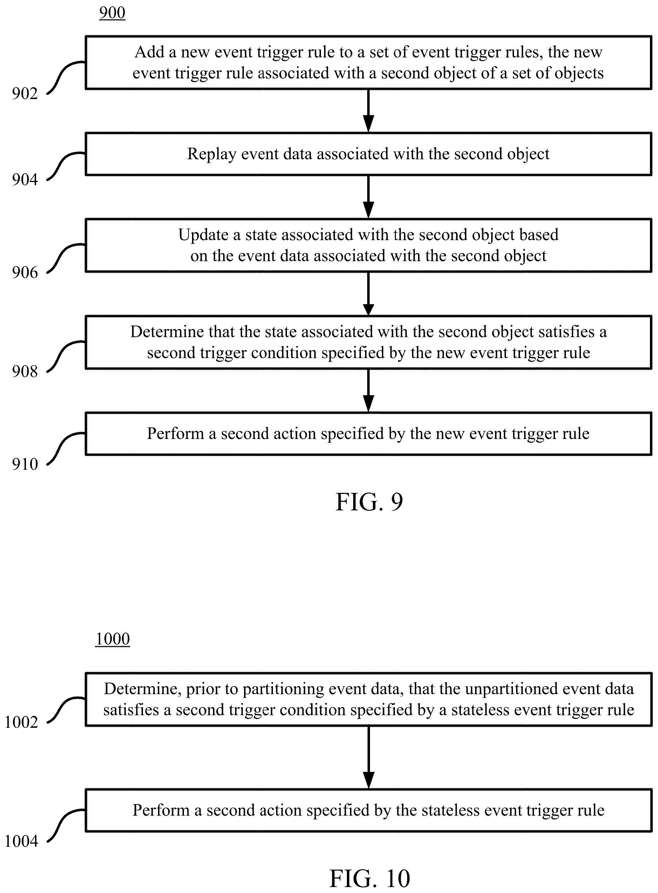

Embodiments described herein may operate in various ways to perform event stream processing of a new trigger rule. For instance, FIG. 9 depicts a flowchart 900 of a process for event stream processing of a new trigger rule, in accordance with an embodiment. Server infrastructure 102, may, for example, operate according to flowchart 900. Note that not all steps of flowchart 900 need to be performed in all embodiments, and in some embodiments, the steps of flowchart 900 may be performed in different orders than shown. Flowchart 900 is described as follows with respect to FIGS. 1, 2, and 4 for illustrative purposes.

Flowchart 900 starts at step 902. In step 902, a new event trigger rule is added to a set of event trigger rules, the new event trigger rule associated with a second object of a set of objects. For example, new trigger rule 402 is added to and/or activated in rules data 108.

In step 904, event data associated with the second object is replayed. For example, state updater 210 of event processor 110C accesses past event data 404 from event data 202.

In step 906, a state associated with the second object is updated using the event data associated with the second object. For example, state updater 210 of event processor 110C updates state 222 using past event data 404.

In step 908, the state associated with the second object is determined to satisfy a second trigger condition associated with the new event trigger rule. For example, stateful rule executer 212 of event processor 110C determines that state 222 satisfies a trigger condition of new trigger rule 402.

In step 910, a second action associated with the new event trigger rule is performed. For example, stateful rule executer 212 of event processor 110C causes responsive action 406 to be performed.

Embodiments described herein may operate in various ways to perform event stream processing of a stateless event trigger rule. For instance, FIG. 10 depicts a flowchart 1000 of a process for event stream processing of a stateless event trigger rule, in accordance with an embodiment. Server infrastructure 102, may, for example, operate according to flowchart 1000. Flowchart 1000 is described as follows with respect to FIGS. 1 and 2 for illustrative purposes.

Flowchart 1000 starts at step 1002. In step 1002, prior to partitioning event data, it is determined that the event data satisfies a second trigger condition associated with a stateless event trigger rule. For example, stateless rule executer 208 determines that event data of event data 112 satisfies a trigger condition of a stateless trigger rule 216.

In step 1004, a second action associated with the stateless event trigger rule is performed. For example, stateless rule executer 208 causes a responsive action 218 to be performed.

### III. Example Mobile Device and Computer System Implementation

Server infrastructure 102, ingestion pipeline 104, data partitioner 106, rules data 108, event processor(s) 110, event data 202, state data 204, progress data 206, stateless rule executer 208, state updater 210, stateful rule executer 212, progress updater 214, and/or the components described therein, and/or the steps of flowcharts 500, 600, 700, 800, 900, and/or 1000 are implemented in hardware, or hardware combined with one or both of software and/or firmware. For example, ingestion pipeline 104, data partitioner 106, rules data 108, event processor(s) 110, event data 202, state data 204, progress data 206, stateless rule executer 208, state updater 210, stateful rule executer 212, progress updater 214, and/or the components described therein, and/or the steps of flowcharts 500, 600, 700, 800, 900, and/or 1000 are each implemented as computer program code/instructions configured to be executed in one or more processors and stored in a computer readable storage medium. Alternatively, server infrastructure 102, ingestion pipeline 104, data partitioner 106, rules data 108, event processor(s) 110, event data 202, state data 204, progress data 206, stateless rule executer 208, state updater 210, stateful rule executer 212, progress updater 214, and/or the components described therein, and/or the steps of flowcharts 500, 600, 700, 800, 900, and/or 1000 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 11. FIG. 11 shows a block diagram of an exemplary computing environment 1100 that includes a computing device 1102. Computing device 1102 is an example of server infrastructure 102, event processor(s) 110, and/or components described therein, which each include one or more of the components of computing device 1102. In some embodiments, computing device 1102 is communicatively coupled with devices (not shown in FIG. 11) external to computing environment 1100 via network 1104. Network 1104 comprises one or more networks such as local area networks (LANs), wide area networks (WANs), enterprise networks, the Internet, etc. In examples, network 1104 includes one or more wired and/or wireless portions. In some examples, network 1104 additionally or alternatively includes a cellular network for cellular communications. Computing device 1102 is described in detail as follows.

Computing device 1102 can be any of a variety of types of computing devices. Examples of computing device 1102 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 1102 is a stationary computing device such as a desktop computer, a personal computer (PC), a stationary server device, a minicomputer, a mainframe, a supercomputer, etc.

As shown in FIG. 11, computing device 1102 includes a variety of hardware and software components, including a processor 1110, a storage 1120, a graphics processing unit (GPU) 1142, a neural processing unit (NPU) 1144, one or more input devices 1130, one or more output devices 1150, one or more wireless modems 1160, one or more wired interfaces 1180, a power supply 1182, a location information (LI) receiver 1184, and an accelerometer 1186. Storage 1120 includes memory 1156, which includes non-removable memory 1122 and removable memory 1124, and a storage device 1188. Storage 1120 also stores an operating system 1112, application programs 1114, and application data 1116. Wireless modem(s) 1160 include a Wi-Fi modem 1162, a Bluetooth modem 1164, and a cellular modem 1166. Output device(s) 1150 includes a speaker 1152 and a display 1154. Input device(s) 1130 includes a touch screen 1132, a microphone 1134, a camera 1136, a physical keyboard 1138, and a trackball 1140. Not all components of computing device 1102 shown in FIG. 11 are present in all embodiments, additional components not shown may be present, and in a particular embodiment any combination of the components are present. In examples, components of computing device 1102 are mounted to a circuit card (e.g., a motherboard) of computing device 1102, integrated in a housing of computing device 1102, or otherwise included in computing device 1102. The components of computing device 1102 are described as follows.

In embodiments, a single processor 1110 (e.g., central processing unit (CPU), microcontroller, a microprocessor, signal processor, ASIC (application specific integrated circuit), and/or other physical hardware processor circuit) or multiple processors 1110 are present in computing device 1102 for performing such tasks as program execution, signal coding, data processing, input/output processing, power control, and/or other functions. In examples, processor 1110 is a single-core or multi-core processor, and each processor core is single-threaded or multithreaded (to provide multiple threads of execution concurrently). Processor 1110 is configured to execute program code stored in a computer readable medium, such as program code of operating system 1112 and application programs 1114 stored in storage 1120. The program code is executable to cause processor 1110 to perform operations, including the processes/methods disclosed herein. Operating system 1112 controls the allocation and usage of the components of computing device 1102 and provides support for one or more application programs 1114 (also referred to as "applications" or "apps"). In examples, application programs 1114 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 1110 includes one or more general processors (e.g., CPUs) configured with or coupled to one or more hardware accelerators, such as one or more NPUs 1144 and/or one or more GPUs 1142.

Any component in computing device 1102 can communicate with any other component according to function, although not all connections are shown for ease of illustration. For instance, as shown in FIG. 11, bus 1106 is a multiple signal line communication medium (e.g., conductive traces in silicon, metal traces along a motherboard, wires, etc.) present to communicatively couple processor 1110 to various other components of computing device 1102, although in other embodiments, an alternative bus, further buses, and/or one or more individual signal lines is/are present to communicatively couple components. Bus 1106 represents one or more of any of several types of bus structures, including a memory bus or memory controller, a peripheral bus, an accelerated graphics port, and a processor or local bus using any of a variety of bus architectures.

Storage 1120 is physical storage that includes one or both of memory 1156 and storage device 1188, which store operating system 1112, application programs 1114, and application data 1116 according to any distribution. Non-removable memory 1122 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 1122 includes main memory and is separate from or fabricated in a same integrated circuit as processor 1110. As shown in FIG. 11, non-removable memory 1122 stores firmware 1118 that is present to provide low-level control of hardware. Examples of firmware 1118 include BIOS (Basic Input/Output System, such as on personal computers) and boot firmware (e.g., on smart phones). In examples, removable memory 1124 is inserted into a receptacle of or is otherwise coupled to computing device 1102 and can be removed by a user from computing device 1102. Removable memory 1124 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 1188 are present that are internal and/or external to a housing of computing device 1102 and are or are not removable. Examples of storage device 1188 include a hard disk drive, a SSD, a thumb drive (e.g., a USB (Universal Serial Bus) flash drive), or other physical storage device.

One or more programs are stored in storage 1120. Such programs include operating system 1112, one or more application programs 1114, and other program modules and program data. Examples of such application programs include computer program logic (e.g., computer program code/instructions) for implementing ingestion pipeline 104, data partitioner 106, rules data 108, event processor(s) 110, event data 202, state data 204, progress data 206, stateless rule executer 208, state updater 210, stateful rule executer 212, progress updater 214, and/or each of the components described therein, as well as any of flowcharts 500, 600, 700, 800, 900, 1000, and/or any individual steps thereof.

Storage 1120 also stores data used and/or generated by operating system 1112 and application programs 1114 as application data 1116. Examples of application data 1116 include web pages, text, images, tables, sound files, video data, and other data. In examples, application data 1116 is sent to and/or received from one or more network servers or other devices via one or more wired or wireless networks. Storage 1120 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 1102 through one or more input devices 1130 and receives information from computing device 1102 through one or more output devices 1150. Input device(s) 1130 includes one or more of touch screen 1132, microphone 1134, camera 1136, physical keyboard 1138 and/or trackball 1140 and output device(s) 1150 includes one or more of speaker 1152 and display 1154. Each of input device(s) 1130 and output device(s) 1150 are integral to computing device 1102 (e.g., built into a housing of computing device 1102) or are external to computing device 1102 (e.g., communicatively coupled wired or wirelessly to computing device 1102 via wired interface(s) 1180 and/or wireless modem(s) 1160). Further input devices 1130 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1154 displays information, as well as operating as touch screen 1132 by receiving user commands and/or other information (e.g., by touch, finger gestures, virtual keyboard, etc.) as a user interface. Any number of each type of input device(s) 1130 and output device(s) 1150 are present, including multiple microphones 1134, multiple cameras 1136, multiple speakers 1152, and/or multiple displays 1154.

In embodiments where GPU 1142 is present, GPU 1142 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 1142 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 1144 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 1128. In an example, NPU 1144 is configured for a data-driven parallel computing and is highly efficient at processing massive multimedia data such as videos and images and processing data for neural networks. NPU 1144 is configured for efficient handling of AI-related tasks, such as speech recognition, background blurring in video calls, photo or video editing processes like object detection, etc.

In embodiments disclosed herein that implement ML models, NPU 1144 can be utilized to execute such ML models, of which MLM 1128 is an example. For instance, where applicable, MLM 1128 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 1144 is used to train MLM 1128. To train MLM 1128, training data is that includes input features (attributes) and their corresponding output labels/target values (e.g., for supervised learning) is collected. A training algorithm is a computational procedure that is used so that MLM 1128 learns from the training data. Parameters/weights are internal settings of MLM 1128 that are adjusted during training by the training algorithm to reduce a difference between predictions by MLM 1128 and actual outcomes (e.g., output labels). In some examples, MLM 1128 is set with initial values for the parameters/weights. A loss function measures a dissimilarity between predictions by MLM 1128 and the target values, and the parameters/weights of MLM 1128 are adjusted to minimize the loss function. The parameters/weights are iteratively adjusted by an optimization technique, such as gradient descent. In this manner, MLM 1128 is generated through training by NPU 1144 to be used to generate inferences based on received input feature sets for particular applications. MLM 1128 is generated as a computer program or other type of algorithm configured to generate an output (e.g., a classification, a prediction/inference) based on received input features, and is stored in the form of a file or other data structure.

In examples, such training of MLM 1128 by NPU 1144 is supervised or unsupervised. According to supervised learning, input objects (e.g., a vector of predictor variables) and a desired output value (e.g., a human-labeled supervisory signal) train MLM 1128. The training data is processed, building a function that maps new data on expected output values. Example algorithms usable by NPU 1144 to perform supervised training of MLM 1128 in particular implementations include support-vector machines, linear regression, logistic regression, Naïve Bayes, linear discriminant analysis, decision trees, K-nearest neighbor algorithm, neural networks, and similarity learning.

In an example of supervised learning where MLM 1128 is an LLM, MLM 1128 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 1128 is trained to learn patterns from unlabeled data. For instance, in embodiments where MLM 1128 implements unsupervised learning techniques, MLM 1128 identifies one or more classifications or clusters to which an input belongs. During a training phase of MLM 1128 according to unsupervised learning, MLM 1128 tries to mimic the provided training data and uses the error in its mimicked output to correct itself (i.e., correct weights and biases). In further examples, NPU 1144 perform unsupervised training of MLM 1128 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 1144 need not necessarily be present in all ML model embodiments. In embodiments where ML models are present, any one or more of processor 1110, GPU 1142, and/or NPU 1144 can be present to train and/or execute MLM 1128.

One or more wireless modems 1160 can be coupled to antenna(s) (not shown) of computing device 1102 and can support two-way communications between processor 1110 and devices external to computing device 1102 through network 1104, as would be understood to persons skilled in the relevant art(s). Wireless modem 1160 is shown generically and can include a cellular modem 1166 for communicating with one or more cellular networks, such as a GSM network for data and voice communications within a single cellular network, between cellular networks, or between the mobile device and a public switched telephone network (PSTN). In examples, wireless modem 1160 also or alternatively includes other radio-based modem types, such as a Bluetooth modem 1164 (also referred to as a "Bluetooth device") and/or Wi-Fi modem 1162 (also referred to as an "wireless adaptor"). Wi-Fi modem 1162 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1164 is configured to communicate with another Bluetooth-capable device according to the Bluetooth short-range wireless technology standard(s) such as IEEE 802.15.1 and/or managed by the Bluetooth Special Interest Group (SIG).

Computing device 1102 can further include power supply 1182, LI receiver 1184, accelerometer 1186, and/or one or more wired interfaces 1180. Example wired interfaces 1180 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1180 of computing device 1102 provide for wired connections between computing device 1102 and network 1104, or between computing device 1102 and one or more devices/peripherals when such devices/peripherals are external to computing device 1102 (e.g., a pointing device, display 1154, speaker 1152, camera 1136, physical keyboard 1138, etc.). Power supply 1182 is configured to supply power to each of the components of computing device 1102 and receives power from a battery internal to computing device 1102, and/or from a power cord plugged into a power port of computing device 1102 (e.g., a USB port, an A/C power port). LI receiver 1184 is useable for location determination of computing device 1102 and in examples includes a satellite navigation receiver such as a Global Positioning System (GPS) receiver and/or includes other type of location determiner configured to determine location of computing device 1102 based on received information (e.g., using cell tower triangulation, etc.). Accelerometer 1186, when present, is configured to determine an orientation of computing device 1102.

Note that the illustrated components of computing device 1102 are not required or all-inclusive, and fewer or greater numbers of components can be present as would be recognized by one skilled in the art. In examples, computing device 1102 includes one or more of a gyroscope, barometer, proximity sensor, ambient light sensor, digital compass, etc. In an example, processor 1110 and memory 1156 are co-located in a same semiconductor device package, such as being included together in an integrated circuit chip, FPGA, or system-on-chip (SOC), optionally along with further components of computing device 1102.

In embodiments, computing device 1102 is configured to implement any of the above-described features of flowcharts herein. Computer program logic for performing any of the operations, steps, and/or functions described herein is stored in storage 1120 and executed by processor 1110.

In some embodiments, server infrastructure 1170 is present in computing environment 1100 and is communicatively coupled with computing device 1102 via network 1104. Server infrastructure 1170, when present, is a network-accessible server set (e.g., a cloud-based environment or platform). As shown in FIG. 11, server infrastructure 1170 includes clusters 1172. Each of clusters 1172 comprises a group of one or more compute nodes and/or a group of one or more storage nodes. For example, as shown in FIG. 11, cluster 1172 includes nodes 1174. Each of nodes 1174 are accessible via network 1104 (e.g., in a "cloud-based" embodiment) to build, deploy, and manage applications and services. In examples, any of nodes 1174 is a storage node that comprises a plurality of physical storage disks, SSDs, and/or other physical storage devices that are accessible via network 1104 and are configured to store data associated with the applications and services managed by nodes 1174.

Each of nodes 1174, as a compute node, comprises one or more server computers, server systems, and/or computing devices. For instance, a node 1174 in accordance with an embodiment includes one or more of the components of computing device 1102 disclosed herein. Each of nodes 1174 is configured to execute one or more software applications (or "applications") and/or services and/or manage hardware resources (e.g., processors, memory, etc.), which are utilized by users (e.g., customers) of the network-accessible server set. In examples, as shown in FIG. 11, nodes 1174 includes a node 1146 that includes storage 1148 and/or one or more of a processor 1158 (e.g., similar to processor 1110, GPU 1142, and/or NPU 1144 of computing device 1102). Storage 1148 stores application programs 1176 and application data 1178. Processor(s) 1158 operate application programs 1176 which access and/or generate related application data 1178. In an implementation, nodes such as node 1146 of nodes 1174 operate or comprise one or more virtual machines, with each virtual machine emulating a system architecture (e.g., an operating system), in an isolated manner, upon which applications such as application programs 1176 are executed.

In embodiments, one or more of clusters 1172 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 1172 are included in a datacenter in a distributed collection of datacenters. In embodiments, exemplary computing environment 1100 comprises part of a cloud-based platform.

In an embodiment, computing device 1102 accesses application programs 1176 for execution in any manner, such as by a client application and/or a browser at computing device 1102.

In an example, for purposes of network (e.g., cloud) backup and data security, computing device 1102 additionally and/or alternatively synchronizes copies of application programs 1114 and/or application data 1116 to be stored at network-based server infrastructure 1170 as application programs 1176 and/or application data 1178. In examples, operating system 1112 and/or application programs 1114 include a file hosting service client configured to synchronize applications and/or data stored in storage 1120 at network-based server infrastructure 1170.

In some embodiments, on-premises servers 1192 are present in computing environment 1100 and are communicatively coupled with computing device 1102 via network 1104. On-premises servers 1192, when present, are hosted within an organization's infrastructure and, in many cases, physically onsite of a facility of that organization. On-premises servers 1192 are controlled, administered, and maintained by IT (Information Technology) personnel of the organization or an IT partner to the organization. Application data 1198 can be shared by on-premises servers 1192 between computing devices of the organization, including computing device 1102 (when part of an organization) through a local network of the organization, and/or through further networks accessible to the organization (including the Internet). Furthermore, in examples, on-premises servers 1192 serve applications such as application programs 1196 to the computing devices of the organization, including computing device 1102. Accordingly, in examples, on-premises servers 1192 include storage 1194 (which includes one or more physical storage devices such as storage disks and/or SSDs) for storage of application programs 1196 and application data 1198 and include a processor 1190 (e.g., similar to processor 1110, GPU 1142, and/or NPU 1144 of computing device 1102) for execution of application programs 1196. In some embodiments, multiple processors 1190 are present for execution of application programs 1196 and/or for other purposes. In further examples, computing device 1102 is configured to synchronize copies of application programs 1114 and/or application data 1116 for backup storage at on-premises servers 1192 as application programs 1196 and/or application data 1198.

Embodiments described herein may be implemented in one or more of computing device 1102, network-based server infrastructure 1170, and on-premises servers 1192. For example, in some embodiments, computing device 1102 is used to implement systems, clients, or devices, or components/subcomponents thereof, disclosed elsewhere herein. In other embodiments, a combination of computing device 1102, network-based server infrastructure 1170, and/or on-premises servers 1192 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1120. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1114) are stored in storage 1120. Such computer programs can also be received via wired interface(s) 1160 and/or wireless modem(s) 1160 over network 1104. Such computer programs, when executed or loaded by an application, enable computing device 1102 to implement features of embodiments discussed herein. Accordingly, such computer programs represent controllers of the computing device 1102.

Embodiments are also directed to computer program products comprising computer code or instructions stored on any computer-readable medium or computer-readable storage medium. Such computer program products include the physical storage of storage 1120 as well as further physical storage types.

### IV. Additional Example Embodiments

In embodiments, a system comprises: a processor; and a memory device comprising program code executable to cause the processor to: receive event data associated with a set of objects; determine, based on rule hints determined from a set of event trigger rules, a set of logical partitions for partitioning the event data, a first logical partition of the set of logical partitions comprising first event data associated with a first object of the set of objects; provide, to a first event processor of a set of event processors, the first logical partition to enable the first event processor to update a state associated with the first object based on the first event data in the first logical partition; determine that the state associated with the first object satisfies a first trigger condition specified by a first event trigger rule of the set of event trigger rules; and perform a first action specified by the first event trigger rule.

In embodiments, to determine the set of logical partitions for partitioning the event data, the program code is executable to cause the processor to: determine a set of capacities of the set of event processors; and determine the set of logical partitions based on the set of capacities of the set of event processors.

In embodiments, the program code is executable to further cause the processor to: determine a set of updated capacities of the set of event processors; determine, based on the set of updated capacities, a set of updated logical partitions for repartitioning the event data, a first updated logical partition of the set of updated logical partitions comprising second event data associated with the first object; access, by a second event processor of the set of event processors, state information associated with the first object; and provide, to the second event processor, the first updated logical partition to enable the second event processor to update the state associated with the first object based on the second event data in the first updated logical partition.

In embodiments, the program code is executable to further cause the processor to: periodically store, by the first event processor, a progress indicator indicative of the first event data processed by the first event processor; transfer processing of the first logical partition from the first event processor to a second event processor of the set of event processors; access, by the second event processor, the first process indicator and state information associated with the first object; redirect the first logical partition from the first event processor to the second event processor; and process, by the second event processor, the first event data in the first logical partition starting from a position determined based on the progress indicator.

In embodiments, the program code is executable to further cause the processor to: add a new event trigger rule to the set of event trigger rules, the new event trigger rule associated with a second object of the set of objects; replay event data associated with the second object; update a state associated with the second object based on the event data associated with the second object; determine that the state associated with the second object satisfies a second trigger condition specified by the new event trigger rule; and perform a second action specified by the new event trigger rule.

In embodiments, the program code is executable to further cause the processor to: determine, prior to partitioning the event data, that the event data satisfies a second trigger condition specified by a stateless event trigger rule; and perform a second action specified by the stateless event trigger rule.

In embodiments, to perform the first action, the program code is executable to cause the processor to perform at least one of: transmit a message to a recipient associated with the first object; open, in a ticketing system, a ticket for the first object; invoke a webhook associated with the first object; call a function of an application program interface (API); or automatically perform a remedial action to alter the state of the first object.

In embodiments, a method comprises: receiving event data associated with a set of objects; determining, based on rule hints determined from a set of event trigger rules, a set of logical partitions for partitioning the event data, a first logical partition of the set of logical partitions comprising first event data associated with a first object of the set of objects; providing, to a first event processor of a set of event processors, the first logical partition to enable the first event processor to update a state associated with the first object based on the first event data in the first logical partition; determining that the state associated with the first object satisfies a first trigger condition specified by a first event trigger rule of the set of event trigger rules; and performing a first action specified by the first event trigger rule.

In embodiments, determining, based on rule hints determined from a set of event trigger rules, a set of logical partitions for partitioning the event data comprises: determining a set of capacities of the set of event processors; and determining the set of logical partitions based on the set of capacities of the set of event processors.

In embodiments, the method further comprises: determining a set of updated capacities of the set of event processors; determining, based on the set of updated capacities, a set of updated logical partitions for repartitioning the event data, a first updated logical partition of the set of updated logical partitions comprising second event data associated with the first object; accessing, by a second event processor of the set of event processors, state information associated with the first object; and providing, to the second event processor, the first updated logical partition to enable the second event processor to update the state associated with the first object based on the second event data in the first updated logical partition.

In embodiments, the method further comprises: periodically storing, by the first event processor, a progress indicator indicative of the first event data processed by the first event processor; transferring processing of the first logical partition from the first event processor to a second event processor of the set of event processors; accessing, by the second event processor, the first process indicator and state information associated with the first object; redirecting the first logical partition from the first event processor to the second event processor; and processing, by the second event processor, the first event data in the first logical partition starting from a position determined based on the progress indicator.

In embodiments, the method further comprises: adding a new event trigger rule to the set of event trigger rules, the new event trigger rule associated with a second object of the set of objects; replaying event data associated with the second object; updating a state associated with the second object based on the event data associated with the second object; determining that the state associated with the second object satisfies a second trigger condition specified by the new event trigger rule; and performing a second action specified by the new event trigger rule.

In embodiments, the method further comprises: determining, prior to partitioning the event data, that the event data satisfies a second trigger condition specified by a stateless event trigger rule; and performing a second action specified by the stateless event trigger rule.

In embodiments, performing a first action comprises at least one of: transmitting a message to a recipient associated with the first object; opening, in a ticketing system, a ticket for the first object; invoking a webhook associated with the first object; calling a function of an application program interface (API); or automatically performing a remedial action to alter the state of the first object.

In embodiments, a computer-readable storage medium comprises executable instructions that, when executed by a processor, cause the processor to: receive event data associated with a set of objects; determine, based on rule hints determined from a set of event trigger rules, a set of logical partitions for partitioning the event data, a first logical partition of the set of logical partitions comprising first event data associated with a first object of the set of objects; provide, to a first event processor of a set of event processors, the first logical partition to enable the first event processor to update a state associated with the first object based on the first event data in the first logical partition; determine that the state associated with the first object satisfies a first trigger condition specified by a first event trigger rule of the set of event trigger rules; and perform a first action specified by the first event trigger rule.

In embodiments, to determine the set of logical partitions for partitioning the event data, the executable instructions, when executed by the processor, cause the processor to: determine a set of capacities of the set of event processors; and determine the set of logical partitions based on the set of capacities of the set of event processors.

In embodiments, the executable instructions, when executed by the processor, further cause the processor to: determine a set of updated capacities of the set of event processors; determine, based on the set of updated capacities, a set of updated logical partitions for repartitioning the event data, a first updated logical partition of the set of updated logical partitions comprising second event data associated with the first object; access, by a second event processor of the set of event processors, state information associated with the first object; and provide, to the second event processor, the first updated logical partition to enable the second event processor to update the state associated with the first object based on the second event data in the first updated logical partition.

In embodiments, the executable instructions, when executed by the processor, further cause the processor to: periodically store, by the first event processor, a progress indicator indicative of the first event data processed by the first event processor; transfer processing of the first logical partition from the first event processor to a second event processor of the set of event processors; access, by the second event processor, the first process indicator and state information associated with the first object; redirect the first logical partition from the first event processor to the second event processor; and process, by the second event processor, the first event data in the first logical partition starting from a position determined based on the progress indicator.

In embodiments, the executable instructions, when executed by the processor, further cause the processor to: add a new event trigger rule to the set of event trigger rules, the new event trigger rule associated with a second object of the set of objects; replay event data associated with the second object; update a state associated with the second object based on the event data associated with the second object; determine that the state associated with the second object satisfies a second trigger condition specified by the new event trigger rule; and perform a second action specified by the new event trigger rule.

In embodiments, the executable instructions, when executed by the processor, further cause the processor to: determine, prior to partitioning the event data, that the event data satisfies a second trigger condition specified by a stateless event trigger rule; and perform a second action specified by the stateless event trigger rule.

### V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

While various embodiments of the present disclosure have been described above, it should be understood that they have been presented by way of example only, and not limitation. It will be understood by those skilled in the relevant art(s) that various changes in form and details may be made therein without departing from the spirit and scope of the invention as defined in the appended claims. Accordingly, the breadth and scope of the present invention should not be limited by any of the above-described exemplary embodiments, but should be defined only in accordance with the following claims and their equivalents.
**The following is a list of further preferred embodiments of the invention:**
Embodiment 1. A system (100, 200, 300, 400, 1100) comprising:
   a processor (1110, 1142, 1144, 1158, 1190); and
   a memory device (1120, 1148, 1194) comprising program code (1114, 1176, 1196) executable to cause the processor (1110, 1142, 1144, 1158, 1190) to:
      receive (502) event data (112, 114) associated with a set of objects;
   determine (504), based on rule hints (116) determined from a set of event trigger rules (120), a set of logical partitions (118) for partitioning the event data (112, 114), a first logical partition (118) of the set of logical partitions (118) comprising first event data (112, 114) associated with a first object of the set of objects;
   provide (506), to a first event processor (110, 110A-110C) of a set of event processors (110, 110A-110C), the first logical partition (118) to enable the first event processor (110, 110A-110C) to update a state (222) associated with the first object based on the first event data (112, 114) in the first logical partition (118);
   determine (508) that the state (222) associated with the first object satisfies a first trigger condition specified by a first event trigger rule (120) of the set of event trigger rules (120); and
   perform (510) a first action (122) specified by the first event trigger rule (120).
Embodiment 2. The system of embodiment 1, wherein, to determine the set of logical partitions for partitioning the event data, the program code is executable to cause the processor to:
   determine a set of capacities of the set of event processors; and
   determine the set of logical partitions based on the set of capacities of the set of event processors.
Embodiment 3. The system of embodiment 1, wherein the program code is executable to further cause the processor to:
   determine a set of updated capacities of the set of event processors;
   determine, based on the set of updated capacities, a set of updated logical partitions for repartitioning the event data, a first updated logical partition of the set of updated logical partitions comprising second event data associated with the first object;
   access, by a second event processor of the set of event processors, state information associated with the first object; and
   provide, to the second event processor, the first updated logical partition to enable the second event processor to update the state associated with the first object based on the second event data in the first updated logical partition.
Embodiment 4. The system of embodiment 1, wherein the program code is executable to further cause the processor to:
   periodically store, by the first event processor, a progress indicator indicative of the first event data processed by the first event processor;
   transfer processing of the first logical partition from the first event processor to a second event processor of the set of event processors;
   access, by the second event processor, the first process indicator and state information associated with the first object;
   redirect the first logical partition from the first event processor to the second event processor; and
   process, by the second event processor, the first event data in the first logical partition starting from a position determined based on the progress indicator.
Embodiment 5. The system of embodiment 1, wherein the program code is executable to further cause the processor to:
   add a new event trigger rule to the set of event trigger rules, the new event trigger rule associated with a second object of the set of objects;
   replay event data associated with the second object;
   update a state associated with the second object based on the event data associated with the second object;
   determine that the state associated with the second object satisfies a second trigger condition specified by the new event trigger rule; and
   perform a second action specified by the new event trigger rule.
Embodiment 6. The system of embodiment 1, wherein the program code is executable to further cause the processor to:
   determine, prior to partitioning the event data, that the event data satisfies a second trigger condition associated with a stateless event trigger rule; and
   perform a second action associated with the stateless event trigger rule.
Embodiment 7. The system of embodiment 1, wherein, to perform the first action, the program code is executable to cause the processor to perform at least one of:
   transmit a message to a recipient associated with the first object;
   open, in a ticketing system, a ticket for the first object;
   invoke a webhook associated with the first object;
   call a function of an application program interface (API); or
   automatically perform a remedial action to alter the state of the first object.
Embodiment 8. A method (500) comprising:
   receiving (502) event data (112, 114) associated with a set of objects;
   determining (504), based on rule hints (116) determined from a set of event trigger rules (120), a set of logical partitions (118) for partitioning the event data (112, 114), a first logical partition (118) of the set of logical partitions (118) comprising first event data (112, 114) associated with a first object of the set of objects;
   providing (506), to a first event processor (110, 110A-110C) of a set of event processors (110, 110A-110C), the first logical partition (118) to enable the first event processor (110, 110A-110C) to update a state (222) associated with the first object based on the first event data (112, 114) in the first logical partition (118);
   determining (508) that the state (222) associated with the first object satisfies a first trigger condition specified by a first event trigger rule (120) of the set of event trigger rules (120); and
   performing (510) a first action (122) specified by the first event trigger rule (120).
Embodiment 9. The method of embodiment 8, wherein said determining, based on rule hints determined from a set of event trigger rules, a set of logical partitions for partitioning the event data comprises:
   determining a set of capacities of the set of event processors; and
   determining the set of logical partitions based on the set of capacities of the set of event processors.
Embodiment 10. The method of embodiment 8, further comprising:
   determining a set of updated capacities of the set of event processors;
   determining, based on the set of updated capacities, a set of updated logical partitions for repartitioning the event data, a first updated logical partition of the set of updated logical partitions comprising second event data associated with the first object;
   accessing, by a second event processor of the set of event processors, state information associated with the first object; and
   providing, to the second event processor, the first updated logical partition to enable the second event processor to update the state associated with the first object based on the second event data in the first updated logical partition.
Embodiment 11. The method of embodiment 8, further comprising:
   periodically storing, by the first event processor, a progress indicator indicative of the first event data processed by the first event processor;
   transferring processing of the first logical partition from the first event processor to a second event processor of the set of event processors;
   accessing, by the second event processor, the first process indicator and state information associated with the first object;
   redirecting the first logical partition from the first event processor to the second event processor; and
   processing, by the second event processor, the first event data in the first logical partition starting from a position determined based on the progress indicator.
Embodiment 12. The method of embodiment 8, further comprising
   adding a new event trigger rule to the set of event trigger rules, the new event trigger rule associated with a second object of the set of objects;
   replaying event data associated with the second object;
   updating a state associated with the second object based on the event data associated with the second object;
   determining that the state associated with the second object satisfies a second trigger condition specified by the new event trigger rule; and
   performing a second action specified by the new event trigger rule.
Embodiment 13. The method of embodiment 8, further comprising:
   determining, prior to partitioning the event data, that the event data satisfies a second trigger condition specified by a stateless event trigger rule; and
   performing a second action specified by the stateless event trigger rule.
Embodiment 14. The method of embodiment 8, wherein said performing the first action comprises at least one of:
   transmitting a message to a recipient associated with the first object;
   opening, in a ticketing system, a ticket for the first object;
   invoking a webhook associated with the first object;
   calling a function of an application program interface (API); or
   automatically performing a remedial action to alter the state of the first object.
Embodiment 15. A computer-readable storage medium (1120, 1148, 1194) comprising executable instructions (1114, 1176, 1196) that, when executed by a processor (1110, 1142, 1144, 1158, 1190), cause the processor (1110, 1142, 1144, 1158, 1190) to:
   receive (502) event data (112, 114) associated with a set of objects;
   determine (504), based on rule hints (116) determined from a set of event trigger rules (120), a set of logical partitions (118) for partitioning the event data (112, 114), a first logical partition (118) of the set of logical partitions (118) comprising first event data (112, 114) associated with a first object of the set of objects;
   provide (506), to a first event processor (110, 110A-110C) of a set of event processors (110, 110A-110C), the first logical partition (118) to enable the first event processor (110, 110A-110C) to update a state (222) associated with the first object based on the first event data (112, 114) in the first logical partition (118);
   determine (508) that the state (222) associated with the first object satisfies a first trigger condition specified by a first event trigger rule (120) of the set of event trigger rules (120); and
   perform (510) a first action (122) specified by the first event trigger rule (120).
Embodiment 16. The computer-readable storage medium of embodiment 15, wherein, to determine the set of logical partitions for partitioning the event data, the executable instructions, when executed by the processor, cause the processor to:
   determine a set of capacities of the set of event processors; and
   determine the set of logical partitions based on the set of capacities of the set of event processors.
Embodiment 17. The computer-readable storage medium of embodiment 15, wherein the executable instructions, when executed by the processor, further cause the processor to:
   determine a set of updated capacities of the set of event processors;
   determine, based on the set of updated capacities, a set of updated logical partitions for repartitioning the event data, a first updated logical partition of the set of updated logical partitions comprising second event data associated with the first object;
   access, by a second event processor of the set of event processors, state information associated with the first object; and
   provide, to the second event processor, the first updated logical partition to enable the second event processor to update the state associated with the first object based on the second event data in the first updated logical partition.
Embodiment 18. The computer-readable storage medium of embodiment 15, wherein the executable instructions, when executed by the processor, further cause the processor to:
   periodically store, by the first event processor, a progress indicator indicative of the first event data processed by the first event processor;
   transfer processing of the first logical partition from the first event processor to a second event processor of the set of event processors;
   access, by the second event processor, the first process indicator and state information associated with the first object;
   redirect the first logical partition from the first event processor to the second event processor; and
   process, by the second event processor, the first event data in the first logical partition starting from a position determined based on the progress indicator.
Embodiment 19. The computer-readable storage medium of embodiment 15, wherein the executable instructions, when executed by the processor, further cause the processor to:
   add a new event trigger rule to the set of event trigger rules, the new event trigger rule associated with a second object of the set of objects;
   replay event data associated with the second object;
      update a state associated with the second object based on the event data associated with the second object;
   determine that the state associated with the second object satisfies a second trigger condition specified by the new event trigger rule; and
   perform a second action specified by the new event trigger rule.
Embodiment 20. The computer-readable storage medium of embodiment 15, wherein the executable instructions, when executed by the processor, further cause the processor to:
   determine, prior to partitioning the event data, that the event data satisfies a second trigger condition specified by a stateless event trigger rule; and
   perform a second action specified by the stateless event trigger rule.

## Claims

1. A system (100, 200, 300, 400, 1100) comprising:
a processor (1110, 1142, 1144, 1158, 1190); and
a memory device (1120, 1148, 1194) comprising program code (1114, 1176, 1196) executable to cause the processor (1110, 1142, 1144, 1158, 1190) to:
receive (502) event data (112, 114) associated with a set of objects;
determine (504), based on rule hints (116) determined from a set of event trigger rules (120), a set of logical partitions (118) for partitioning the event data (112, 114), a first logical partition (118) of the set of logical partitions (118) comprising first event data (112, 114) associated with a first object of the set of objects;
provide (506), to a first event processor (110, 110A-110C) of a set of event processors (110, 110A-110C), the first logical partition (118) to enable the first event processor (110, 110A-110C) to update a state (222) associated with the first object based on the first event data (112, 114) in the first logical partition (118);
determine (508) that the state (222) associated with the first object satisfies a first trigger condition specified by a first event trigger rule (120) of the set of event trigger rules (120); and
perform (510) a first action (122) specified by the first event trigger rule (120).

2. The system of claim 1, wherein, to determine the set of logical partitions for partitioning the event data, the program code is executable to cause the processor to:
determine a set of capacities of the set of event processors; and
determine the set of logical partitions based on the set of capacities of the set of event processors.

3. The system of claim 1, wherein the program code is executable to further cause the processor to:
determine a set of updated capacities of the set of event processors;
determine, based on the set of updated capacities, a set of updated logical partitions for repartitioning the event data, a first updated logical partition of the set of updated logical partitions comprising second event data associated with the first object;
access, by a second event processor of the set of event processors, state information associated with the first object; and
provide, to the second event processor, the first updated logical partition to enable the second event processor to update the state associated with the first object based on the second event data in the first updated logical partition.

4. The system of claim 1, wherein the program code is executable to further cause the processor to:
periodically store, by the first event processor, a progress indicator indicative of the first event data processed by the first event processor;
transfer processing of the first logical partition from the first event processor to a second event processor of the set of event processors;
access, by the second event processor, the first process indicator and state information associated with the first object;
redirect the first logical partition from the first event processor to the second event processor; and
process, by the second event processor, the first event data in the first logical partition starting from a position determined based on the progress indicator.

5. The system of claim 1, wherein the program code is executable to further cause the processor to:
add a new event trigger rule to the set of event trigger rules, the new event trigger rule associated with a second object of the set of objects;
replay event data associated with the second object;
update a state associated with the second object based on the event data associated with the second object;
determine that the state associated with the second object satisfies a second trigger condition specified by the new event trigger rule; and
perform a second action specified by the new event trigger rule.

6. The system of claim 1, wherein the program code is executable to further cause the processor to:
determine, prior to partitioning the event data, that the event data satisfies a second trigger condition associated with a stateless event trigger rule; and
perform a second action associated with the stateless event trigger rule.

7. The system of claim 1, wherein, to perform the first action, the program code is executable to cause the processor to perform at least one of:
transmit a message to a recipient associated with the first object;
open, in a ticketing system, a ticket for the first object;
invoke a webhook associated with the first object;
call a function of an application program interface (API); or
automatically perform a remedial action to alter the state of the first object.

8. A method (500) comprising:
receiving (502) event data (112, 114) associated with a set of objects;
determining (504), based on rule hints (116) determined from a set of event trigger rules (120), a set of logical partitions (118) for partitioning the event data (112, 114), a first logical partition (118) of the set of logical partitions (118) comprising first event data (112, 114) associated with a first object of the set of objects;
providing (506), to a first event processor (110, 110A-110C) of a set of event processors (110, 110A-110C), the first logical partition (118) to enable the first event processor (110, 110A-110C) to update a state (222) associated with the first object based on the first event data (112, 114) in the first logical partition (118);
determining (508) that the state (222) associated with the first object satisfies a first trigger condition specified by a first event trigger rule (120) of the set of event trigger rules (120); and
performing (510) a first action (122) specified by the first event trigger rule (120).

9. The method of claim 8, wherein said determining, based on rule hints determined from a set of event trigger rules, a set of logical partitions for partitioning the event data comprises:
determining a set of capacities of the set of event processors; and
determining the set of logical partitions based on the set of capacities of the set of event processors.

10. The method of one of claims 8 or 9, further comprising:
determining a set of updated capacities of the set of event processors;
determining, based on the set of updated capacities, a set of updated logical partitions for repartitioning the event data, a first updated logical partition of the set of updated logical partitions comprising second event data associated with the first object;
accessing, by a second event processor of the set of event processors, state information associated with the first object; and
providing, to the second event processor, the first updated logical partition to enable the second event processor to update the state associated with the first object based on the second event data in the first updated logical partition.

11. The method of one of claims 8 to 10, further comprising:
periodically storing, by the first event processor, a progress indicator indicative of the first event data processed by the first event processor;
transferring processing of the first logical partition from the first event processor to a second event processor of the set of event processors;
accessing, by the second event processor, the first process indicator and state information associated with the first object;
redirecting the first logical partition from the first event processor to the second event processor; and
processing, by the second event processor, the first event data in the first logical partition starting from a position determined based on the progress indicator.

12. The method of claim 8, further comprising
adding a new event trigger rule to the set of event trigger rules, the new event trigger rule associated with a second object of the set of objects;
replaying event data associated with the second object;
updating a state associated with the second object based on the event data associated with the second object;
determining that the state associated with the second object satisfies a second trigger condition specified by the new event trigger rule; and
performing a second action specified by the new event trigger rule.

13. The method of one of claims 8 to 11, further comprising:
determining, prior to partitioning the event data, that the event data satisfies a second trigger condition specified by a stateless event trigger rule; and
performing a second action specified by the stateless event trigger rule, or
wherein said performing the first action comprises at least one of:
transmitting a message to a recipient associated with the first object;
opening, in a ticketing system, a ticket for the first object;
invoking a webhook associated with the first object;
calling a function of an application program interface (API); or
automatically performing a remedial action to alter the state of the first object.

14. A computer-readable storage medium (1120, 1148, 1194) comprising executable instructions (1114, 1176, 1196) that, when executed by a processor (1110, 1142, 1144, 1158, 1190), cause the processor (1110, 1142, 1144, 1158, 1190) to:
receive (502) event data (112, 114) associated with a set of objects;
determine (504), based on rule hints (116) determined from a set of event trigger rules (120), a set of logical partitions (118) for partitioning the event data (112, 114), a first logical partition (118) of the set of logical partitions (118) comprising first event data (112, 114) associated with a first object of the set of objects;
provide (506), to a first event processor (110, 110A-110C) of a set of event processors (110, 110A-110C), the first logical partition (118) to enable the first event processor (110, 110A-110C) to update a state (222) associated with the first object based on the first event data (112, 114) in the first logical partition (118);
determine (508) that the state (222) associated with the first object satisfies a first trigger condition specified by a first event trigger rule (120) of the set of event trigger rules (120); and
perform (510) a first action (122) specified by the first event trigger rule (120).

15. The computer-readable storage medium of claim 14, wherein, to determine the set of logical partitions for partitioning the event data, the executable instructions, when executed by the processor, cause the processor to:
determine a set of capacities of the set of event processors; and
determine the set of logical partitions based on the set of capacities of the set of event processors, or
wherein the executable instructions, when executed by the processor, further cause the processor to:
determine a set of updated capacities of the set of event processors;
determine, based on the set of updated capacities, a set of updated logical partitions for repartitioning the event data, a first updated logical partition of the set of updated logical partitions comprising second event data associated with the first object;
access, by a second event processor of the set of event processors, state information associated with the first object; and
provide, to the second event processor, the first updated logical partition to enable the second event processor to update the state associated with the first object based on the second event data in the first updated logical partition, or
wherein the executable instructions, when executed by the processor, further cause the processor to:
periodically store, by the first event processor, a progress indicator indicative of the first event data processed by the first event processor;
transfer processing of the first logical partition from the first event processor to a second event processor of the set of event processors;
access, by the second event processor, the first process indicator and state information associated with the first object;
redirect the first logical partition from the first event processor to the second event processor; and
process, by the second event processor, the first event data in the first logical partition starting from a position determined based on the progress indicator, or
wherein the executable instructions, when executed by the processor, further cause the processor to:
add a new event trigger rule to the set of event trigger rules, the new event trigger rule associated with a second object of the set of objects;
replay event data associated with the second object;
update a state associated with the second object based on the event data associated with the second object;
determine that the state associated with the second object satisfies a second trigger condition specified by the new event trigger rule; and
perform a second action specified by the new event trigger rule, and/or
wherein the executable instructions, when executed by the processor, further cause the processor to:
determine, prior to partitioning the event data, that the event data satisfies a second trigger condition specified by a stateless event trigger rule; and
perform a second action specified by the stateless event trigger rule.
